# FASCICULE DE BREVET EUROPEEN

(11) **EP 3 491 284 B1**
(45) Date de publication et mention de la délivrance du brevet: **14.07.2021**
(21) Numéro de dépôt: 17757790.5
(22) Date de dépôt: 18.07.2017
(51) Int. Cl.: F24C 15/08, F24C 15/34, F16L 59/04

(54) **PROCEDE D'ISOLATION ET APPAREIL OBTENU**
ISOLIERVERFAHREN UND ERHALTENES GERÄT
INSULATION METHOD AND APPLIANCE OBTAINED

(30) Priorité: 01.08.2016 FR 1657467
(43) Date de publication de la demande: 05.06.2019
(73) Titulaire: SAINT-GOBAIN ISOVER, 92400 Courbevoie (FR)
(72) Inventeur: BAREYT, Christophe, 60340 Saint-leu d'Esserent (FR); GOGEON, David, 60870 Villers Saint Paul (FR)
(74) Mandataire: Saint-Gobain Recherche
(86) Numéro de dépôt international: PCT/FR2017/051956
(87) Numéro de publication internationale: WO 2018/024962

(56) Documents cités:
- WO-A1-01/36859
- FR-A1- 2 620 521
- US-A- 2 235 542
- US-A- 4 542 040
- US-A1- 2008 003 431

## Description

La présente invention se rapporte au domaine de l'isolation, principalement au domaine de l'isolation thermique, et concerne plus particulièrement l'isolation de dispositifs (ou appareils) tridimensionnels susceptibles d'être exposés à de hautes températures (pouvant atteindre en particulier quelques centaines de degrés), tels que des fours de cuisson, en particulier destinés à l'usage domestique. La présente invention concerne également les appareils isolés obtenus.

Il est connu d'isoler des parties de four, par exemple l'enceinte (ou chambre ou caisson ou moufle) de chauffe (ou cuisson), pour protéger de la chaleur ou de la surchauffe les composants présents autour de l'enceinte ou les parties externes du four, cette isolation permettant aussi d'éviter les pertes de chaleur à l'extérieur de l'enceinte et d'améliorer les performances énergétiques du four lors de son utilisation. Les isolants utilisés doivent être en mesure de résister aux températures élevées auxquelles ils sont (au moins temporairement) confrontés et de conserver leurs performances (notamment mécaniques, ou d'isolation suffisante) à ces températures sans risque de dégradation ou d'émissions potentiellement dangereuses pour la santé.

Les isolants habituellement utilisés pour isoler ces enceintes sont des feutres ou mats de laine minérale dont la tenue en température est très appréciée et qui sont installés ou insérés, généralement manuellement, autour de l'enceinte.

Cependant, s'il est aisé d'isoler des surfaces planes ou des surfaces extérieures d'objets ou appareils avec ces produits isolants sous forme de panneaux ou nappes que l'on trouve facilement dans le commerce, il est plus difficile de conformer ces isolants à des objets tridimensionnels, à plus forte raison lorsque la forme de l'objet est complexe ou que les espaces dans lesquels ils doivent être insérés présentent une forme et une épaisseur variables.

Dans le cas des fours ménagers où l'isolation est disposée autour de l'enceinte (ou du moufle) en tôle émaillée délimitant la zone de chauffe du four, l'opération d'isolation consiste à découper les matelas de laine minérale d'épaisseurs et densités variées aux dimensions appropriées et à les appliquer contre les surfaces à isoler, en procédant de diverses façons selon qu'il s'agit d'isoler la ceinture (formée par les deux faces latérales et par les faces inférieure et supérieure) ou la face arrière du four : pour la ceinture, on utilise généralement une nappe d'isolant enroulée autour de l'enceinte, tandis que pour la face arrière on ajoute simplement un isolant sous forme de plaque.

Cette façon de procéder comporte un certain nombre d'inconvénients : la pose de ces isolants peut être complexe ou nécessiter de procéder avant montage de l'enceinte extérieure du four, elle nécessite en outre le découpage des isolants et leur pose manuelle, ces diverses opérations venant se rajouter au temps de pose des isolants et pouvant notamment poser des problèmes à l'opérateur (irritation de la peau, poussière...).

Il est en outre difficile d'obtenir un contact parfaitement continu avec l'isolant sur toute la surface de l'enceinte : selon la façon dont l'opérateur opère, il peut subsister des lames d'air responsables de déperditions thermiques entre l'enceinte et l'isolant. L'épaisseur et la densité des couches de laines minérales utilisées étant de plus limitées par les capacités des lignes de fabrication existantes, il peut également en résulter des zones mal isolées (épaisseur inappropriée pour remplir les espaces ou reliefs changeant des carcasses de four) et des ponts thermiques, etc.

En outre, pour assurer l'intégrité mécanique du revêtement isolant, on imprègne généralement les isolants de liants, notamment organiques, pouvant provoquer à haute température des émissions gazeuses indésirables, ou l'on utilise des produits aiguilletés, la structure rigide de ces types de produits pouvant créer un effet tonneau (bombage de l'isolant autour de la carcasse) source également de ponts thermiques, les coins et recoins de la cavité à isoler restant notamment vides (l'isolant n'ayant notamment pas une expansion suffisante du fait de sa tenue mécanique).

Le document WO 93/01444 propose un procédé dans lequel l'isolation est formée par projection d'un matériau fibreux minéral sur la surface d'un objet avec mouillage simultané des fibres par de l'eau et/ou un liant, suivie de la mise en forme de la couche projetée puis du séchage/durcissement de la couche mise en forme. Bien qu'elle réduise les inconvénients liés à la manipulation directe de la laine minérale, cette technique suscite toujours un envol de poussières et pose des problèmes de nettoyage du poste de travail. En outre, il est difficile de contrôler la quantité de matériau déposée et notamment l'homogénéité de la densité du matériau appliqué, les divers traitements opérés étant bien plus coûteux en temps (par exemple de l'ordre de quelques heures) que celui nécessaire à la pose des isolants traditionnels une fois découpés (notamment de moins d'une minute).

Le document WO 2001/036859 décrit un autre procédé dans lequel l'isolation est formée par insufflation de flocons de laine minérale entre la surface à isoler et une enveloppe telle qu'une feuille métallique ou un voile de verre, les flocons étant véhiculés par un courant gazeux pendant qu'on dirige sur eux au moins un jet de liant aqueux (permettant notamment d'éviter l'envol de poussières, de véhiculer et d'appliquer les flocons et de rigidifier ultérieurement la couche une fois sec) pour former une couche délimitée par l'enveloppe, avant séchage pour éliminer l'eau. Cette technique se base en outre sur l'utilisation de buses coniques usuelles, à faible débit, la pression du gaz utilisé étant de l'ordre de 50 à 120 mbar, et le flux fibres/liant pouvant avoir un angle d'incidence entre + 15° et -15° par rapport à la surface à isoler. Les risques d'envol de poussières sont réduits par cette technique voire supprimés. Cependant, ce procédé reste long à mettre en œuvre, l'isolation par cette technique nécessitant un temps de remplissage des cavités du four généralement supérieur à 3 min pour une densité (ou masse volumique) de laine minérale par exemple de l'ordre de 60 kg/m³, les différentes régions de la cavité étant en outre isolées successivement. On observe également des problèmes de coalescence des flocons encollés au contact de la surface à isoler, pouvant entrainer une inhomogénéité de densité à certains endroits, la densité de flocons obtenue dans la cavité n'excédant généralement pas en outre 60 kg/m³, limitant ainsi les performances d'isolation obtenues.

Le document FR 2620521 A divulgue également un procédé d'isolation de four à l'aide d'un isolant fibreux insufflé.

L'invention a donc cherché à mettre au point une technique d'isolation améliorée permettant d'obvier à au moins l'un des inconvénients énoncés ci-dessus, en particulier une technique d'isolation simple et pratique à mettre en œuvre pour l'opérateur, permettant d'obtenir des bonnes performances d'isolation, notamment améliorées, en particulier pour l'isolation d'appareils (ou dispositifs) tridimensionnels présentant un ou des espaces internes (surfaces internes ou cavités), en particulier complexes ou à section irrégulière, à isoler, et notamment pour l'isolation d'appareils susceptibles d'être exposés à de hautes températures, tels que les fours, en particulier ménagers.

Ce but a été atteint par le procédé d'isolation selon l'invention. La présente invention a ainsi pour objet un procédé d'isolation d'un four selon la revendication 1, ledit four présentant un ou des espaces (ou cavités) internes à isoler, en particulier tridimensionnels, selon lequel on insuffle (dans un courant gazeux), dans le ou lesdits espaces à isoler (dans la ou les cavités ou entre la ou les surfaces à isoler et une ou des parois adjacentes), des flocons et/ou des nodules de (ou en) laine(s) et/ou fibres, en particulier minérale(s), (l'insufflation se faisant) sans ajout (ou sans ajouter), pendant l'insufflation, de liant ni d'eau, ou en d'autres termes, on insuffle dans le ou lesdits espaces des flocons et/ou nodules de laine(s) et/ou fibres, en particulier minérale(s), libres et secs.

On entend par « espaces tridimensionnels à isoler » des espaces ou cavités internes délimités par deux surfaces principales en vis-à-vis l'une de l'autre, dont l'une au moins (mais de préférence les deux) a une forme tridimensionnelle, c'est-à-dire non rigoureusement plane, en particulier peut être une succession de plans jointifs liés par des coudes en angles droits ou courbes. Une forme particulière de surface délimitant une cavité tridimensionnelle peut s'inscrire dans une forme sensiblement cubique.

Sans ajout de liant pendant l'insufflation s'entend dans la définition précédente comme signifiant sans ajout pendant l'insufflation de substance/composé(s) (en particulier sous forme liquide, voire solide) apte(s) à lier les flocons/nodules insufflés entre eux. Comme indiqué ultérieurement, la présence d'un composé traditionnellement qualifié de "liant" mais non susceptible de lier les flocons/nodules entre eux, par exemple d'un composé ou liant déjà réagi, notamment dans les flocons/nodules utilisés pour l'insufflation, n'est toutefois pas exclue. De préférence toutefois, les flocons/nodules insérés dans le dispositif d'insufflation sont dénués de liant(s) (même déjà réagi(s)), de même que le flux de matière insufflé(e), comme reprécisé ultérieurement.

L'insufflation des flocons et/ou nodules selon l'invention se fait donc sans ajout délibèré de liant (à pouvoir de liaison desdits flocons/nodules) ni d'eau, les flocons et/ou nodules insufflés dans l'espace à isoler étant donc "libres" ou séparables ou non liés entre eux par un liant, et lesdits flocons/nodules étant également secs, c'est-à-dire sans eau ajoutée notamment lors de l'insufflation, avec un taux d'humidité éventuelle (ou taux d'eau éventuel), dans lesdits flocons/nodules, ainsi que dans le flux de matière projeté(e), inférieur(e) à 2% en poids, notamment inférieur(e) à 1% en poids, par rapport au poids de la matière insufflée par le courant gazeux d'insufflation, l'humidité de l'air ambiant, en effet, pouvant notamment être absorbée dans la matière insufflée.

L'insufflation effectuée selon l'invention peut notamment être qualifiée d'insufflation "séche" ou se faisant "à sec" ou "par voie sèche", sans milieu (notamment liquide) ajouté de type eau ou liant (organique ou inorganique), tout le flux (ou toute la matière) projeté(e) (formée au moins des flocons ou nodules mais pouvant également comprendre des composés additionnels comme des aérogels ou additifs, comme précisé ultérieurement) étant avantageusement dépourvu(e) d'eau et de liant ajouté(s). Par "ajouté", on entend ajouté au cours du procédé d'isolation dans le dispositif de projection/d'insufflation utilisé pour le dépôt de l'isolant/de la couche isolante, sur les flocons ou nodules avant qu'ils n'atteignent la partie à isoler et/ou dans le courant gazeux d'insufflation (par la même alimentation que les flocons ou nodules ou par une autre alimentation), sachant que, comme déjà évoqué, les flocons ou nodules peuvent de leur côté déjà comprendre avant leur insufflation un liant, notamment issu de leur procédé de fabrication et pouvant être présent à des taux généralement inférieurs à 8% en poids de liant sec par rapport au poids desdits flocons ou nodules (tels qu'introduits dans le dispositif d'insufflation), ce liant étant dans ce cas non susceptible de les lier entre eux au cours de l'insufflation ou dans l'appareil obtenu car étant notamment déjà polymérisé ou réticulé ou cuit ou durci ou ayant déjà réagi. D'autres matières ou substances peuvent le cas échéant être ajouté(e)s lors de l'insufflation à partir du moment notamment où il ne s'agit pas de liants ou d'eau, en particulier d'autres isolants solides, ou des additifs en faibles proportions, comme indiqué ultérieurement.

Le flux de matière (formée de composants solides et éventuellement de composants liquides) insufflé dans l'espace interne à isoler peut ainsi comprendre, outre les flocons et/ou les nodules de laine(s) et/ou fibres :
moins de 2%, de préférence moins de 1%, en poids (par rapport au poids de la matière insufflée par le courant gazeux d'insufflation) d'humidité/ d'eau, provenant essentiellement de l'air ambiant,
- éventuellement moins de 8% de liant dénué de pouvoir de liaison (ou inapte à lier) des flocons et/ou nodules entre eux, provenant essentiellement du procédé de fabrication des flocons et/ou nodules et se trouvant déjà sur et/ou dans les flocons introduits dans le dispositif d'insufflation, ce liant étant déjà polymérisé ou réticulé ou cuit ou durci ou ayant déjà réagi,
- éventuellement un ou des autres composants dans la mesure où il ne s'agit pas de liant(s) encore apte(s) à lier les flocons/nodules entre eux et dans la mesure où il ne s'agit pas de composant(s) renfermant de l'eau (ce(s) composant(s) étant donc dénué(s) d'eau), en particulier:
   - un ou des matériaux isolants additionnels, en particulier sous forme de particules, notamment des aérogels,
   - un ou des additifs, en faible proportion, notamment à moins de 1% en poids (par rapport au poids de la matière insufflée par le courant gazeux d'insufflation), et de préférence à moins de 0.5% en poids, par exemple un ou des additifs de type huile minérale, anti-statique, silicone, etc.

Le flux (ou la matière) insufflé(e) (ou projeté(e)) est ainsi avantageusement essentiellement (de préférence à au moins 98% en poids de la matière projetée formant la couche isolante, et jusqu'à 100% en poids) formé(e) de matière sèche (également majoritairement, ou essentiellement, solide ou formée, ou constituée, de particules solides), formée notamment des flocons et/ou nodules précités, véhiculés par le courant gazeux, et venant remplir l'espace à isoler pour former une barrière isolante (sous forme d'au moins une couche isolante) thermiquement. Un ou des composants liquides, notamment un ou des additifs, peuvent le cas échéant être présents, par exemple une ou des huiles minérales, le taux de ces composants ou additifs liquides étant préférentiellement inférieur à 1% en poids, notamment inférieur à 0.5% en poids, par rapport au poids de matière projetée, ce taux étant préférentiellement nul, le courant gazeux ne projetant préférentiellement que des particules solides, avantageusement formées pour l'essentiel (à au moins 95% en poids) voire uniquement, de matériaux isolants, lesdits matériaux isolants comprenant au moins les flocons ou nodules de laine(s) et/ou fibres précités.

S'il n'est pas exclu dans la présente invention que les flocons ou nodules utilisés incorporent déjà un liant (déjà réagi), organique ou inorganique, issu en particulier de leur procédé de fabrication, le taux de celui-ci n'excède avantageusement pas 8% en poids comme indiqué précédemment, ce liant éventuellement présent étant de préférence inorganique ou minéral. De préférence les flocons ou nodules utilisés sont choisis dénués de liant, de même qu'ils sont dénués d'eau (l'eau résiduelle éventuelle provenant le cas échéant de l'humidité ambiante).

La présente invention concerne également un dispositif d'insufflation particulièrement adapté pour la mise en œuvre du procédé selon l'invention, comme décrit ultérieurement.

La présente invention concerne également un appareil isolé thermiquement, obtenu avantageusement selon le procédé de l'invention, comme décrit ultérieurement.

La structure des flocons ou nodules et le mode d'insufflation selon l'invention dans l'espace à isoler, par exemple (dans) la ou les cavités entre l'enceinte ou moufle d'un four et les parois extérieures adjacentes ou le caisson externe du four, permettent l'obtention d'une couche isolante de dimensions adaptées aux reliefs de cet espace, sans que la pose de l'isolant ne présente de difficultés d'accès aux parties à isoler, et permettent au besoin d'obtenir des couches de densités plus grandes que celles obtenues avec les procédés préexistants (en particulier plus grandes que celles obtenues par voie humide, le procédé et le dispositif selon l'invention rendant notamment possible le travail à plus haute pression), les flocons ou nodules se répartissant dans tous les recoins de la cavité à isoler sans risques de coalescence, la présente invention permettant ainsi d'éliminer les problèmes de ponts thermiques et d'améliorer les performances d'isolation obtenues. Cette bonne isolation améliore le rendement énergétique des appareils de type fours et diminue leur consommation, tout en protégeant les éléments proches de la source de chaleur présents dans lesdits fours, ainsi que l'environnement de ces appareils, des températures élevées utilisées.

La présente invention ne nécessite pas non plus d'étape de séchage ou de traitement de l'isolant une fois déposé et pour autant ne présente pas non plus, malgré l'absence de liant ou d'eau, de problèmes liés à l'envoi de poussières (l'isolant étant confiné dans un espace fermé); le procédé est par conséquent rapide et ne nécessite pas d'interruption de la chaîne de fabrication, de même qu'il présente peu de risques liés à la manipulation de fibres, en particulier minérales.

De plus, l'absence de liant ou d'eau, de façon surprenante, n'affecte pas les propriétés de l'isolant obtenu et il n'est pas non plus nécessaire de lier les flocons ou nodules par un autre traitement, de même qu'il s'avère également non nécessaire dans la présent invention d'ajouter des agents anti poussières, éliminant de ce fait tout risque d'émission d'odeurs ou de polluants de l'air générés par ces types d'agents ou liants lors des premiers cycles de fonctionnement d'appareils de type four. En outre, on observe qu'il ne se produit pas de tassement des flocons dans les cavités contrairement à l'insufflation en voie humide ou de tels tassements peuvent se produire.

De manière avantageuse, il est également possible le cas échéant de coupler les flocons et/ou nodules précités avec d'autres isolants solides afin d'améliorer les performances d'isolation thermique ou d'autres performances (amélioration des propriétés anti-feu par exemple), comme précisé ultérieurement.

Les flocons ou nodules de laine(s) ou fibres utilisés selon l'invention sont des fibres en paquets ou des amalgames (tridimensionnels), ou agrégats ou touffes ou mèches ou bouloches, de fibres, dans lesquels les fibres sont généralement enchevêtrées, et non des fibres individualisées, les flocons (présentant généralement un aspect duveteux ou cotonneux) étant les produits d'isolation habituellement utilisés pour l'Isolation des combles perdus de maisons neuves ou à rénover. Dans la présente invention ils permettent de combler les interstices et recoins des espaces à isoler et de s'opposer à la circulation d'air dans ces espaces, diminuant ainsi la conductivité thermique de l'ensemble.

Les flocons ou nodules utilisés selon la présente invention sont en particulier en laine(s) minérale(s) (souffiée(s)/ du type à souffler) et/ou fibres minérales ; on utilise par exemple des flocons en laine de verre (ou laine de verre en flocons) commercialisés par les sociétés Saint-Gobain Isover sous la marque Comblissimo® ou par la société Certainteed sous la marque Optima®, ou des flocons en laine de roche (ou laine de roche en flocons) commercialisés par la société Saint-Gobain Eurocoustic sous la rèférence "Coatwool HP®".

Ces flocons ou nodules peuvent être produits à partir de fibres minérales formées selon des procédés connus, les fibres pouvant ensuite être mises en nodules ou paquets (directement après étirage ou ultérieurement), par exemple comme expliqué dans le document FR-A-2 661 687.

Ils peuvent également être obtenus par broyage à partir de tout matériau à base de laine(s) minérale(s), de préférence dénué de liant organique, par exemple à partir de feutres ou matelas de laine minérale (en particulier à faible taux de composants pouvant se dégrader à haute température), tels que ceux décrits notamment dans les documents EP-A-0 403 347, EP-A-0 819 788, DE-A-39 18 485.

Outre les flocons ou nodules à base de laine(s) et/ou fibres de verre ou de roche, on peut également utiliser comme flocons ou nodules selon la présente invention des flocons ou nodules de laine(s) et/ou fibre(s) de type céramiques ou de carbone notamment. On peut utiliser des flocons ou nodules de même nature ou le cas échéant des mélanges de deux ou plusieurs de ces différents types de flocons ou nodules.

Le broyage pour obtenir les flocons ou nodules, ou le choix des flocons/nodules, est effectué de façon que ces flocons/nodules aient une taille inférieure à 50 mm, de préférence inférieure à 30 mm, quelle que soit la forme de ces flocons/nodules, en particulier comprise, pour au moins 50 % (en poids), et de préférence au moins 75%, des flocons, entre 5 et 25 mm, pour permettre une insufflation et un remplissage particulièrement efficaces.

On appelle taille d'un flocon ou nodule son diamètre équivalent, c'est-à-dire le diamètre de la sphère qui se comporterait de manière identique lors de l'analyse granulométrique des flocons/nodules, la distribution granulométrique (ensemble des tailles de particules) étant mesurée en particulier par tamisage, par exemple à l'aide d'un dispositif de tamisage automatique commercialisé sous la référence RX-24 par la société Retsch Sieve Shaker, en superposant 4 tamis (de celui présentant la plus petite taille de trou posé en premier sur le support vibrant jusqu'à celui présentant la plus grande taille de trous posé en dernier, les tailles de trous (carrés) étant successivement (en partant du bas) de 6 mm de côté, 10 mm de côté, 19 mm de côté et 25 mm de côté), la puissance étant réglée à 65% et le temps de tamisage étant de 5 min pour 10 à 12 g de produit, la masse de flocons/nodules présente dans chaque tamis étant ensuite pesée, En particulier de 30 à 75% en poids des flocons/nodules utilisés dans la présente invention présentent une taille comprise entre 10 et 25 mm, et entre 5 et 30% de ces flocons/nodules présentent une taille inférieure à 6 mm.

Les flocons ou nodules sont de préférence à base de laine(s) et/ou fibres fine(s) pour de bonnes performances d'isolation. De façon particulièrement avantageuse selon l'invention, on utilise des flocons et/ou nodules de (ou en) laine(s) (ou fibres) de verre ou de carbone ou céramique(s), avec un micronaire de préférence inférieur à 25 l/min, notamment compris entre 3 et 18 l/min, ou des flocons et/ou nodules de laine(s) (ou fibres) de roche, avec un fasonaire de préférence supérieur à 150 mmce et inférieur à 350 mmce (milimètres colonne d'eau), notamment compris entre 200 et 350 mmce.

La finesse des fibres est souvent déterminée par la valeur de leur micronaire (F) sous 5 g. La mesure du micronaire appelée aussi " indice de finesse " rend compte de la surface spécifique grâce à la mesure de la perte de charge aérodynamique lorsqu'une quantité donnée de fibres est soumise a une pression donnée d'un gaz - en général de l'air ou de l'azote. Cette mesure est usuelle dans les unités de production de fibres minérales, elle est réalisée selon la norme DIN 53941 ou ASTM D 1448 et utilise un appareil dit « appareil micronaire ».

Toutefois un tel appareil présente une limite de mesure quand les fibres utilisées sont fines. Pour des fibres très fines, il est possible et préférable de mesurer la finesse (ou le "micronaire") en l/min grâce à une technique connue et décrite dans la demande de brevet WO2003/098209. Cette demande de brevet concerne un dispositif de détermination de l'indice de finesse de fibres comportant un dispositif de mesurage de l'indice de finesse, ledit dispositif de mesurage étant pourvu d'au moins un premier orifice relié à une cellule de mesure adaptée pour recevoir un échantillon constitué d'une pluralité de fibres (dans le cas présent un échantillon des flocons ou nodules), et d'un second orifice relié à un dispositif de mesurage d'une pression différentielle située de part et d'autre dudit échantillon, ledit dispositif de mesurage de la pression différentielle étant destiné à être relié à un dispositif de production d'écoulement de fluide, le dispositif de mesurage comportant en outre au moins un débitmètre volumétrique du fluide traversant ladite cellule. Ce dispositif donne des correspondances entre des valeurs "micronaire" et des litres par minute (l/min).

Le fasonaire est pour sa part déterminé de la façon suivante : on pèse une éprouvette (5g) constituée par une touffe de laine minérale (dans le cas présent un échantillon des flocons ou nodules) exempte d'huile et de liant mais pouvant comporter des composants non fibreux (slug). Cette éprouvette est comprimée dans un volume donné et est traversé par un courant de gaz (air sec ou azote) maintenu à débit constant. La mesure de fasonaire est alors la perte de charge à travers l'éprouvette, évaluée par une colonne d'eau graduée en unité conventionnelle. Classiquement, un résultat de fasonaire est la moyenne des pertes de charge observées pour dix éprouvettes, la mesure s'exprimant en millimètres de colonne d'eau (mmce).

Outre les flocons et/ou nodules, le flux ou la matière insuffle(e) peut également comprendre d'autres composés, en particulier solides, notamment d'autres types d'isolants, afin d'améliorer encore les performances d'isolation ou d'autres performances (amélioration des propriétés anti-feu par exemple). En particulier et avantageusement, la matière insufflée peut également comprendre des aérogels, préférentiellement sous forme particulaire, ou de petites parties ou particules ou billes. Ces composés, le cas échant de plus petite taille que les flocons et nodules utilisés selon l'invention, peuvent également contribuer à améliorer l'Isolation obtenue en venant le cas échéant combler les interstices laissés par les flocons ou nodules. Les aérogels sont des isolants généralement plus performants, mais coûteux, pouvant se présenter notamment sous forme de granules translucides ou de poudre fine. L'insufflation des flocons/nodules rend possible cet ajout d'aérogels, l'insufflation des aérogels seuls posant des problèmes, notamment en terme de sécurité et de poussières. Les aérogels insufflés le cas échéant avec les flocons ou nodules selon l'invention sont avantageusement des aérogels inorganiques, en particulier à base d'oxydes, tels que des aérogels à base de silice, d'aluminium et/ou de titane, et de préférence sont un ou des aérogels de silice sous forme de particules ou granulés ou billes ou poudre. Avantageusement la taille des particules d'aérogels pouvant être utilisés selon l'invention est comprise entre 1 et 5 mm, et leur taux au sein de la matière projetée n'excède pas de préférence 60% en poids (les aérogels étant généralement plus lourds que les flocons).

La matière insufflée, ou les flocons ou nodules de laine(s) ou fibres utilisés selon l'invention peuvent également le cas échéant comprendre un ou plusieurs additifs ajoutés préalablement ou pendant le procédé d'insufflation, ces additifs pouvant le cas échéant se présenter également sous forme de particules ou granules ou billes, tels que des additifs anti-statique, des huiles, etc. à des taux avantageusement inférieurs à 1% en poids (pour l'ensemble des additifs).

Le cas échéant, les flocons/nodules peuvent jouer le rôle de porteurs de ces additifs ou d'autres composés et les répartir ainsi de façon homogène dans l'espace à isoler.

Les flocons ou nodules de laine(s) ou fibres utilisés selon l'invention, de même que le flux de matière projeté, comprennent de préférence un taux de composés organiques (issus par exemple de liant(s) ou d'additifs ajoutés lors de la fabrication des fibres ou des matelas de fibres transformés ensuite en flocons ou nodules) inférieur à 8%, en particulier inférieur à 1% en poids (de la matière insufflée), et sont avantageusement dénués de composés organiques.

De plus, et comme indiqué précédemment, même si la présence de tels agents n'est pas exclue, il n'est pas nécessaire d'ajouter à ces flocons/nodules ou dans le flux insufflé, des agents anti-poussière, la poussière générée le cas échéant restant notamment confinée dans la présente invention dans l'espace intérieur isolé. Le taux d'agents anti-poussière (comme les huiles minérales ou les agents antistatiques) dans la matière insufflée est ainsi de préférence inférieur à 1% en poids par rapport au poids de matière insufflée, et avantageusement la matière insufflée est dénuée d'agent(s) anti-poussières, permettant de limiter encore les risques d'émission d'odeurs et de polluants (COV) comme indiqué précédemment.

Les flocons ou nodules de laine(s) ou fibres et les autres composants éventuels de la matière insufflée sont amenés et introduits dans chacun des espaces à isoler par l'intermédiaire d'un ou de dispositifs d'insufflation comprenant au moins un diffuseur (ou injecteur ou buse) et au moins un conduit/canal d'amenée, connecté(s) à une machine de soufflage, Par cette introduction, les risques d'envol de poussières sont réduits voire supprimés, rendant ainsi le poste de travail plus agréable pour l'opérateur et moins coûteux en entretien. L'introduction dans un espace intérieur délimité par une ou des parois permet de définir la forme de la couche isolante au moment même où elle est appliquée dans l'espace interne ou contre la surface à isoler tout en contrôlant son épaisseur, la couche déposée étant ensuite protégée par lesdites parois ou dans ledit espace intérieur.

La surface interne est une surface à l'intérieur de l'appareil, en particulier débouchant sur la périphérie dudit appareil, la ou les surfaces adjacentes formant avec celle-ci une cavité, la cavité étant un espace creux dans ledit appareil, en particulier débouchant (ayant une ouverture) en périphérie de l'appareil. Dans le cas par exemple d'un four ménager, les espaces (surfaces ou cavités) à isoler sont notamment chacune des faces ou espaces formant la ceinture (faces latérales, face supérieure et face inférieure) autour de l'enceinte du four.

Le cas échéant, certaines évacuations peuvent être présentes dans les parois, en particulier externes, délimitant l'espace à isoler, notamment sous forme d'ouverture(s), de taille inférieure à celle des flocons ou nodules ou autre isolants présents le cas échéant, ou encore sous forme d'ouverture(s) munies de filtre(s) (tel(s) qu'un voile de verre) pour arrêter les isolants tout en laissant passer le gaz, afin de permettre une meilleure évacuation du gaz d'insufflation. Le gaz d'insufflation utilisé est de préférence de l'air.

Le procédé selon l'invention permet d'obtenir des couches isolantes présentant déjà leur forme définitive, sans nécessiter d'étape ultérieure de mise en forme et permet également d'utiliser des débits d'insufflation bien supérieurs à ceux utilisés/atteints notamment lors de projection de flocons/nodules avec liant/eau. On utilise en particulier des débits d'insufflation de l'ordre de 40 à 90 g/s, permettant notamment d'obtenir une densité (ou masse volumique) pour la couche isolante obtenue allant jusqu'à 120 kg/m³ (le débit an cas d'insufflation humide avec eau/liant étant plutôt de l'ordre de 20 g/s), la densité obtenue pouvant être comprise entre 40 et 120 kg/m³, notamment entre 50 et 120 kg/m³, de préférence entre 60 et 120 kg/m³, en particulier entre 80 et 120 kg/m³, voire entre 85 et 120 kg/m³. La pression de gaz d'insufflation peut quant à elle atteindre 45000 Pa, en particulier être comprise entre 12000 Pa et 45000 Pa, de préférence entre 15000 et 25000 Pa, en fonction du volume à remplir et de la densité souhaitée.

De préférence dans le procédé selon l'invention, le courant gazeux d'insufflation est dirigé sensiblement parallèlement au plan médian de l'espace à isoler - par exemple, dans le cas de chaque cavité de four formant la ceinture de l'enceinte de chauffe à isoler, le courant gazeux est dirigé sensiblement parallèlement à la face interne délimitant la cavité considérée avec un angle entre le courant d'insufflation (ou flux insufflé) et le plan (ou la surface) considéré(e) compris entre +5° et -5° afin d'obtenir un remplissage homogène et, le cas échéant, suffisamment dense, et afin également d'éviter le retour de flocons/nodules vers la buse d'insufflation, pouvant éventuellement boucher cette dernière.

De préférence également, dans le cas où l'appareil à isoler présente plusieurs espaces (cavités ou faces internes) à isoler, l'insufflation se fait avantageusement simultanément dans plusieurs desdits espaces, le flux de flocons/nodules étant en particulier divisé en autant de courants (ou flux subsidiaires) que d'espaces à isoler avant d'être insufflé(s) dans lesdits espaces. Avantageusement également, la matière insufflée dans chaque espace est insufflée depuis un point (où se trouve l'orifice de sortie concerné du dispositif d'insufflation) mobile (par exemple en translation le long de l'espace à isoler) de façon que le remplissage de la cavité se fasse progressivement d'une extrémité de la cavité à l'autre, le cas échéant suivant un mouvement commun lorsque le remplissage de plusieurs cavités se fait en simultané, Alternativement, la matière peut être insufflée à partir de points fixes (en particulier ouverture à l'extrémité de la cavité concernée).

L'invention a également pour objet un four selon la revendication 10, ce four présentant au moins un espace intérieur, en particulier tridimensionnel, muni d'au moins une couche isolante, et qui peut être obtenu par un procédé tel que décrit selon l'invention, en particulier un appareil tridimensionnel susceptible d'être porté à de hautes températures, tel qu'un appareil chauffant, pouvant atteindre en particulier quelques centaines de degrés (par exemple 450°C ou même 550°C pour des fours a pyrolyse, et notamment entre 50 et 350°C), tel qu'un four de cuisson, en particulier destiné à l'usage domestique, ladite couche isolante étant formée de flocons et/ou nodules de laine(s) ou fibres, en particulier minérale(s), le taux de liant (éventuel) étant inférieur à 8% en poids de la matière formant ladite couche/ de ladite couche, et étant avantageusement nul, et le taux initial d'eau étant inférieur à 2% en poids de ladite couche, et étant avantageusement nul.

Avantageusement, comme indiqué précédemment, la densité de la couche isolante est comprise entre 40 et 120 kg/m³, notamment entre 50 et 120 kg/m³, de préférence entre 60 et 120 kg/m³, en particulier entre 80 et 120 kg/m³, voire entre 85 et 120 kg/m³.

Dans un mode de réalisation, la couche isolante peut additionnellement comprendre d'autres types d'isolants tels que des particules (billes, granulés...) d'aérogels.

D'autres caractéristiques et avantages de l'invention apparaîtront de la description détaillée qui va suivre faite en regard des dessins annexés dans lesquels :
- la figure 1 représente une vue en perspective d'un (moufle d') appareil de cuisson équipé d'un dispositif d'insufflation pour la mise en œuvre du procédé selon l'invention;
- la figure 2 représente une variante du mode de réalisation en figure 1.

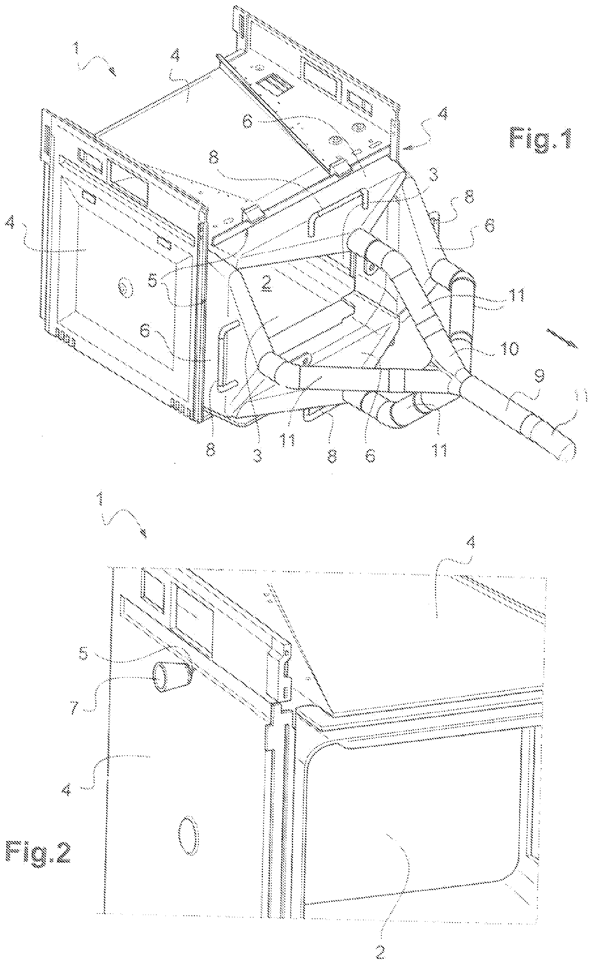

L'appareil de cuisson (ou four) 1 représenté en figure 1 (respectivement en figure 2) comprend une enceinte (ou moufle) de chauffe 2 délimité par des parois internes 3 et des parois externes 4 en regard. Chaque paroi interne et chaque paroi externe en regard forme un espace interne dans lequel une isolation thermique est recherchée. Les espaces sur les côtés, le dessus et le dessous du four forment la ceinture délimitant l'enceinte du four.

L'isolation de la ceinture du four est opérée comme suit selon l'invention:
On introduit à travers chacune des ouvertures 5 donnant accès aux espaces internes à isoler (que l'ouverture soit existante en cours de fabrication comme illustré en figure 1, ou pratiquée sur un four déjà existant, par exemple par perforation, comme illustré en figure 2) des diffuseurs (diffuseurs 6 dans la figure 1, et diffuseur 7 dans la figure 2) d'un dispositif d'insufflation, relié(s) à une machine de soufflage (non représentée). Dans la figure 1, chaque diffuseur est plat pour s'encastrer dans l'ouverture parallélépipédique à l'extrémité de chaque cavité débouchant sur la face arrière du four, et est muni d'une poignée 8 permettant sa manipulation. Dans la figure 2, chaque diffuseur est à section ronde et de diamètre intérieur de l'ordre de 10 à 50 mm, de préférence 10 à 30 mm, et est placé dans une ouverture pratiquée dans une paroi externe, en face notamment de la cavité à isoler (le diffuseur 7 représenté en figure 2 étant ici en face de la cavité à isoler entre la face supérieure du moufle et celle du carter) au centre ou dans un coin le cas échéant, une seule ouverture et un seul diffuseur par face étant généralement suffisant pour effectuer l'isolation de ladite face selon l'invention,

La machine de soufflage comporte une alimentation en flocons de laine minérale, des organes, dits de "démottage", destinés à séparer les flocons qui sont usuellement commercialisés dans des sacs ou balles compactées, un ou des organes de convoyage des flocons (ou conduites) 11, et une soufflerie qui dirige dans la ou les conduites un courant d'air sous pression.

Le dispositif d'insufflation comprend également un embranchement (ou organe de répartition) 10 et un ou des mélangeurs statiques 9.

Les diffuseurs étant agencés de manière sensiblement parallèle aux surfaces internes concernées du four, on procède à l'insufflation d'un courant gazeux porteur de flocons de laine minérale dans chaque cavités du four en simultané. Dans la figure 1, les flocons de laine minérale sont insufflées au travers d'un mélangeur statique 9, puis passent dans un embranchement à quatre branches 10 pour répartir le flux de matière dans les quatre diffuseurs plats de manière homogène ou le cas échéant de manière ciblée ou préférentielle vers l'un des diffuseurs. Une fois l'insufflation commencée, le remplissage des cavités en simultané se fait progressivement par translation des diffuseurs vers l'arrière du four (ou vers l'ouverture des cavités) suivant le sens de la flèche en figure 1 et jusqu'à ce que les diffuseurs encastrés dans les cavités sortent de la carcasse.

Le débit d'insufflation utilisé est de l'ordre de 90 g/s. Pour un four standard, par exemple de référence De Dietrich CZ5702359 commercialisé par la société Brandt, et dont chaque cavité autour de l'enceinte de chauffe mesure environ 45 cm de côté, le temps de remplissage pour une densité d'isolants obtenue de l'ordre de 70 kg/m3 est de l'ordre de 25 s, et il est de l'ordre de 30 s pour une densité de l'ordre de 80 kg/m3 et de 35 s pour une densité de l'ordre de 100 kg/m3. La vitesse de remplissage est particulièrement performante et les densités obtenues peuvent être particulièrement élevées, contrairement notamment aux densités obtenues en procédant en voie humide ou en utilisant des mats de laine minérale découpés,

La répartition des flocons s'opère en outre de façon homogène à l'aide du mélangeur utilisé. Ainsi, sans mélangeur, pour une densité moyenne obtenue de 70 kg/m³ dans les quatre cavités, l'écart-type observé pour la densité au sein de l'ensemble des cavités est de 18 kg/m³, alors que l'utilisation d'un mélangeur convergent (centrant ici le flux) permet de limiter l'écart-type à 5.5 k/m³, et l'utilisation d'un mélangeur statique (fixe et dont la forme permet de mélanger et de centrer ou diriger le flux) permet de limiter l'écart-type à 4,3 kg/m³

La consommation des fours a également été mesurée selon la norme EN60350 sur un four, de référence De Dietrich CZ5702359 commercialisé par la société Brandt, équipé d'une ceinture intérieure isolante en utilisant en premier lieu pour former cette ceinture le procédé de l'invention, puis en remplaçant l'isolation obtenue par une isolation standard à l'aide de feutres aiguilletés de référence TNF 20/80 commercialisés par la société Saint-Gobain Isover. Les mesures d'échauffement à cœur de l'élément à chauffer ont été réalisées sur une brique commercialisée sous la référence Hipor par la société Skamol, la brique ayant été préalablement séchée, puis immergée dans un bain d'eau placé au moins 8 heures au réfrigérateur jusqu'à une température de brique (mesurée dans la brique par deux thermocouples) de 5°C, la brique saturée d'eau et égouttée pendant environ 1min étant ensuite placée au centre du four.

La mesure de la consommation énergétique du four a été faite en mode "chaleur traditionnelle" selon la norme EN60350, où les températures d'échauffement (par rapport à la température ambiante) sont de 140°K, 180°K et 220°K. La consommation du four correspond à la moyenne arithmétique des puissances consommées pour chacune des trois températures de consigne précitées.

Dans le cas du four présentant une ceinture isolante formée du produit standard, la consommation du four a été de 850 Wh. Dans le cas du four présentant une ceinture isolante formée de flocons de laine de verre de référence Optima, la consommation du four a été de 785 Wh.

Les résultats obtenus montrent que l'utilisation du procédé selon l'invention pour l'isolation de fours domestiques ou pour d'autres utilisations à haute température permet d'obtenir des performances énergétiques équivalentes, et même supérieures, aux performances habituellement obtenues, sans avoir les inconvénients des procédés habituels.

Le procédé selon l'invention peut notamment être utilisés avec avantages pour réaliser une nouvelle gamme de fours présentant de bonnes performances d'isolation, ou d'autres appareils, notamment susceptibles d'être soumis à de hautes températures, etc.

## Revendications

1. Procédé d'isolation d'un four, ledit four présentant un ou des espaces internes, en particulier tridimensionnels, à isoler, dans lequel on insuffle, dans le ou lesdits espaces à isoler, des flocons et/ou nodules de laine(s) et/ou fibres minérale(s), sans ajouter de liant ni d'eau, lesdits flocons et/ou nodules ayant une taille inférieure à 50 mm.

2. Procédé selon la revendication 1, **caractérisé en ce que** les flocons et/ou nodules ont une taille inférieure à 30 mm, en particulier comprise, pour au moins 50 % en poids des flocons, entre 5 et 25 mm.

3. Procédé selon l'une des revendications 1 ou 2, **caractérisé en ce que** les flocons et/ou nodules sont en laine(s) ou fibres de verre ou carbone ou céramique(s), avec un micronaire inférieur à 25 l/min, notamment compris entre 3 et 18 l/min, et/ou sont en laine(s) ou fibres de roche, avec un fasonaire supérieur à 150 mmce, notamment compris entre 200 et 350 mmce.

4. Procédé selon l'une des revendications 1 à 3, **caractérisé en ce que** le flux de matière insufflé comprend, outre les flocons et/ou les nodules de laine(s) et/ou fibres :
- moins de 2%, de préférence moins de 1%, en poids d'humidité,
- éventuellement moins de 8% de liant déjà polymérisé ou réticulé ou cuit ou durci ou ayant déjà réagi,
- éventuellement un ou des autres composants inaptes à lier les flocons/nodules entre eux et dénués d'eau, en particulier :
- un ou des matériaux isolants additionnels, en particulier sous forme de particules, notamment des aérogels,
- un ou des additifs, notamment à moins de 1% en poids, par exemple un ou des additifs de type huile minérale, anti-statique, silicone, etc.

5. Procédé selon l'une des revendications 1 à 4, **caractérisé en ce que** les flocons et/ou nodules comprennent un taux de composés organiques inférieur à 8% en poids, de préférence inférieur à 1% en poids, et avantageusement sont dénués de composés organiques, **en ce qu'**ils présentent moins de 8% en poids de liant, et de préférence sont dépourvus de liant, et **en ce que** le taux d'agents anti-poussière dans la matière insufflée est inférieur à 1% en poids, la matière insufflée étant de préférence dénuée d'agent(s) anti-poussières.

6. Procédé selon l'une des revendications 1 à 5, **caractérisé en ce que** la matière insufflée comprend également des aérogels, en particulier sous forme particulaire.

7. Procédé selon l'une des revendications 1 à 6, **caractérisé en ce que** la pression de gaz d'insufflation est comprise entre 12000 Pa et 45000 Pa, de préférence entre 15000 et 45000 Pa, et/ou **en ce que** le débit d'insufflation est de l'ordre de 40 à 90 g/s.

8. Procédé selon l'une des revendications 1 à 7, **caractérisé en ce que** le courant gazeux d'insufflation est dirigé sensiblement parallèlement au plan médian de l'espace à isoler, avec un angle d'incidence du courant d'insufflation avec ledit plan compris entre +5° et -5°.

9. Procédé selon l'une des revendications 1 à 8, **caractérisé en ce que** l'insufflation se fait simultanément dans plusieurs espaces à isoler.

10. Four susceptible d'être obtenu par le procédé selon l'une des revendications 1 à 9 et présentant au moins un espace intérieur, en particulier tridimensionnel, muni d'au moins une couche isolante, **caractérisé en ce que** ladite couche est formée de flocons et/ou nodules de laine(s) ou fibres minérale(s), lesdits flocons et/ou nodules ayant une taille inférieure à 50 mm, le taux de liant étant inférieur à 8% en poids, et étant avantageusement nul, et le taux initial d'eau étant inférieur à 2% en poids de ladite couche, et étant avantageusement nul.

11. Four selon la revendication 10, **caractérisé en ce que** la densité de ladite couche isolante est comprise entre 40 et 120 kg/m³, notamment entre 50 et 120 kg/m³, de préférence entre 60 et 120 kg/m³, en particulier entre 80 et 120 kg/m³, voire entre 85 et 120 kg/m³.

12. Four selon l'une des revendications 10 ou 11, **caractérisé en ce que** la couche isolante comprend également des aérogels.

## Patentansprüche

1. Verfahren zum Isolieren eines Ofens, wobei der Ofen einen oder mehrere zu isolierende Innenräume, insbesondere dreidimensionale Räume, aufweist, bei dem Flocken und/oder Knötchen aus Mineralwolle(n) und/oder -fasern ohne Zugabe von Bindemittel oder Wasser in den oder die zu isolierenden Räume eingeblasen werden, wobei die Flocken und/oder Knötchen eine Größe von weniger als 50 mm aufweisen.

2. Verfahren nach Anspruch 1, **dadurch gekennzeichnet, dass** die Flocken und/oder Knötchen kleiner als 30 mm, insbesondere zwischen 5 und 25 mm bei mindestens 50 Gew.-% der Flocken sind.

3. Verfahren nach einem der Ansprüche 1 oder 2, **dadurch gekennzeichnet, dass** die Flocken und/oder Knötchen aus Glas- oder Kohlenstoff- oder Keramikwolle(n) oder -fasern mit einem Micronaire von weniger als 25 l/min, besonders zwischen 3 und 18 l/min, und/oder aus Steinwolle(n) oder -fasern mit einem Fasonaire von mehr als 150 mmce, besonders zwischen 200 und 350 mmce, sind.

4. Verfahren nach einem der Ansprüche 1 bis 3, **dadurch gekennzeichnet, dass** der eingeblasene Materialstrom zusätzlich zu den Flocken und/oder Knötchen aus Wolle(n) und/oder Fasern Folgendes umfasst:
- weniger als 2 %, vorzugsweise weniger als 1 Gew.-% an Feuchtigkeit,
- gegebenenfalls weniger als 8 % an bereits polymerisiertem oder vernetztem oder gebranntem oder ausgehärtetem oder bereits umgesetztem Bindemittel,
- gegebenenfalls eine oder sonstige Komponente(n), die nicht in der Lage sind, die Flocken/Knötchen miteinander zu verbinden und frei von Wasser sind, insbesondere:
- ein oder mehrere zusätzliche Isoliermaterialien, insbesondere in Form von Partikeln, besonders Aerogelen,
- ein oder mehreren Additive, besonders mit weniger als 1 Gew.-%, z.B. ein oder mehrere Additive vom Typ Mineralöl, Antistatik, Silikon usw.

5. Verfahren nach einem der Ansprüche 1 bis 4, **dadurch gekennzeichnet, dass** die Flocken und/oder Knötchen einen Gehalt an organischen Verbindungen von weniger als 8 Gew.-%, vorzugsweise weniger als 1 Gew.-% umfassen und vorteilhafterweise frei von organischen Verbindungen sind, **dass** sie weniger als 8 Gew.-% an Bindemittel aufweisen und vorzugsweise frei von Bindemittel sind, und **dass** der Gehalt an Staubunterdrückungsmitteln im eingeblasenen Material weniger als 1 Gew.-% beträgt, wobei das eingeblasene Material vorzugsweise frei von Staubunterdrückungsmittel(n) ist.

6. Verfahren nach einem der Ansprüche 1 bis 5, **dadurch gekennzeichnet, dass** das eingeblasene Material auch Aerogele, insbesondere in partikulärer Form, umfasst.

7. Verfahren nach einem der Ansprüche 1 bis 6, **dadurch gekennzeichnet, dass** der Insufflationsgasdruck zwischen 12 000 Pa und 45 000 Pa, vorzugsweise zwischen 15 000 und 45 000 Pa, liegt und/oder dass der Insufflationsgasdurchsatz im Bereich von 40 bis 90 g/s liegt.

8. Verfahren nach einem der Ansprüche 1 bis 7, **dadurch gekennzeichnet, dass** der Insufflationsgasstrom im Wesentlichen parallel zur Mittelebene des zu isolierenden Raumes gerichtet ist, wobei der Einfallswinkel des Insufflationsgasstroms mit dieser Ebene zwischen +5° und -5° liegt.

9. Verfahren nach einem der Ansprüche 1 bis 8, **dadurch gekennzeichnet, dass** das Einblasen gleichzeitig in mehreren zu isolierenden Räumen umgesetzt wird.

10. Ofen, der gemäß dem Verfahren nach einem der Ansprüche 1 bis 9 erhalten werden kann und mindestens einen Innenraum, insbesondere einen dreidimensionalen Raum, aufweist, der mit mindestens einer Isolierschicht versehen ist, **dadurch gekennzeichnet, dass** die Schicht aus Flocken und/oder Knötchen aus Mineralwolle(n) oder -fasern gebildet ist, wobei die Flocken und/oder Knötchen eine Größe von weniger als 50 mm aufweisen, der Bindemittelgehalt weniger als 8 Gew.-% und vorteilhafterweise Null beträgt und der Anfangswassergehalt weniger als 2 Gew.-% der Schicht und vorteilhafterweise Null beträgt.

11. Ofen nach Anspruch 10, **dadurch gekennzeichnet, dass** die Dichte der Isolierschicht zwischen 40 und 120 kg/m³, besonders zwischen 50 und 120 kg/m³, vorzugsweise zwischen 60 und 120 kg/m³, insbesondere zwischen 80 und 120 kg/m³, oder sogar zwischen 85 und 120 kg/m³ liegt.

12. Ofen nach einem der Ansprüche 10 oder 11, **dadurch gekennzeichnet, dass** die Isolierschicht auch Aerogele umfasst.

## Claims

1. A process for insulating an oven, said oven having one or more internal spaces, in particular three-dimensional internal spaces, to be insulated, wherein flakes and/or nodules of wool(s) and/or fibers, in particular mineral wool(s) and/or fibers, are blown into said space(s) to be insulated without adding binder or water, said flakes and/or nodules having a size of less than 50 mm.

2. The process as claimed in claim 1, **characterized in that** the flakes and/or nodules have a size of less than 30 mm, in particular, for at least 50% by weight of the flakes, of between 5 and 25 mm.

3. The process as claimed in either of claims 1 and 2, **characterized in that** the flakes and/or nodules are made of glass or carbon or ceramic wool(s) or fibers, with a micronaire of less than 25 l/min, in particular of between 3 and 18 l/min, and/or are made of rock wool(s) or fibers, with a fasonaire of greater than 150 mmwc, in particular of between 200 and 350 mmwc.

4. The process as claimed in one of claims 1 to 3, **characterized in that** the flow of blown material comprises, besides the flakes and/or nodules of wool(s) and/or fibers :
- less than 2%, preferably less than 1%, by weight of moisture,
- optionally less than 8% of binder already polymerized or crosslinked or cured or hardened or that has already reacted,
- optionally one or more other components incapable of binding the flakes/nodules together and free of water, in particular:
- one or more additional insulating materials, in particular in the form of particles, in particular aerogels,
- one or more additives, in particular at less than 1% by weight, for example one or more additives of mineral oil, antistatic, silicone, etc. type.

5. The process as claimed in one of claims 1 to 4, **characterized in that** the flakes and/or nodules comprise a content of organic compounds of less than 8% by weight, preferably less than 1% by weight, and advantageously are free of organic compounds, **in that** they have less than 8% by weight of binder, and preferably are free of binder, and **in that** the content of anti-dusting agents in the blown material is less than 1% by weight, the blown material preferably being free of anti-dusting agent(s).

6. The process as claimed in one of claims 1 to 5, **characterized in that** the blown material also comprises aerogels, in particular in particulate form.

7. The process as claimed in one of claims 1 to 6, **characterized in that** the blowing gas pressure is between 12 000 Pa and 45 000 Pa, preferably between 15 000 and 45 000 Pa, and/or **in that** the blowing flow rate is of the order of 40 to 90 g/s.

8. The process as claimed in one of claims 1 to 7, **characterized in that** the blowing gas stream is oriented substantially parallel to the mid-plane of the space to be insulated, with an angle of incidence of the blowing stream with said plane of between +5° and -5°.

9. The process as claimed in one of claims 1 to 8, **characterized in that** the blowing is carried out simultaneously in several spaces to be insulated.

10. An oven, obtained in particular by the process as claimed in one of claims 1 to 9 and having at least one internal space, in particular three-dimensional internal space, provided with at least one insulating layer, said layer being formed of flakes and/or nodules of wool(s) and/or fibers, in particular mineral wool(s) and/or fibers, said flakes and/or nodules having a size of less than 50 mm, the binder content being less than 8% by weight, and advantageously being zero, and the initial water content being less than 2% by weight of said layer, and advantageously being zero.

11. The oven as claimed in claim 10, **characterized in that** the density of said insulating layer is between 40 and 120 kg/m³, in particular between 50 and 120 kg/m³, preferably between 60 and 120 kg/m³, in particular between 80 and 120 kg/m³, or even between 85 and 120 kg/m³.

12. The oven as claimed in either of claims 10 and 11, **characterized in that** the insulating layer also comprises aerogels.
